# FASCICULE DE BREVET EUROPEEN

(11) **EP 0 515 294 B1**
(45) Date de publication et mention de la délivrance du brevet: **16.10.1996**
(21) Numéro de dépôt: 92440060.9
(22) Date de dépôt: 20.05.1992
(51) Int. Cl.: B62D 53/06, B62D 49/00

(54) **Liaison articulée dissociable du type à col de cygne entre un véhicule porteur-remorqueur et une semi-remorque porte-engins**
Schwanenhalsartige trennbare Gelenkverbindung zwischen einem Trag- und Zugfahrzeug und einem Geräteträger-Sattelaufliegeranhänger
Swan-neck type separable articulated connection between a load carrying tractor and a semi-trailer for heavy vehicles

(30) Priorité: 21.05.1991 FR 9106191
(43) Date de publication de la demande: 25.11.1992
(73) Titulaire: KAISER, Société Anonyme, F-54260 Longuyon (FR)
(72) Inventeur: Morel, Michel, F-57300 Hagondange (FR); Schlotthauer, Anton, F-6833 Waghäusel (DE)
(74) Mandataire: Metz, Paul

(56) Documents cités:
- CA-A- 1 051 938
- DE-A- 1 921 477
- FR-A- 2 359 021
- FR-A- 2 615 814
- GB-A- 1 194 769
- US-A- 3 450 417
- US-A- 3 536 340
- US-A- 5 040 815

## Description

La présente invention se rapporte à une liaison articulée entre un véhicule porteur-remorqueur et une semi-remorque porte-engins.

La liaison visée par l'invention est du type à col de cygne détachable ou déboîtable.

Le transport de divers engins de travaux publics et de génie civil tels que pelleteuse hydraulique, bulldozer, niveleuse, et d'engins utilitaires de travaux ou de défense, chars ou autres, mais aussi de véhicules de transport, et plus généralement de tous types de charges mobiles, réclame une semi-remorque spéciale à train arrière mono ou multi-essieux, facilement désolidarisable du véhicule moteur.

Une autre contrainte est à prendre immédiatement en compte.

Les engins transportés ne peuvent, en général, pour des raisons diverses telles que vitesse, manoeuvrabilité, impossibilité légale ou réglementaire, se déplacer que sur de très courtes distances.

Ainsi, la semi-remorque destinée à les transporter doit-elle pouvoir amener ces engins jusqu'à leur aire de travail ou d'évolution : chantier, théâtre d'opération ou autre. Ainsi, celle-ci doit présenter, pour certaines utilisations, des caractéristiques techniques adaptées pour son déplacement hors circuit routier, notamment sur des pistes, des chantiers et, pour certains, sur des étendues plus ou moins accidentées.

Par ailleurs, le plateau du châssis de semi-remorque, nécessairement surélevé au niveau du train de roues, rend notablement difficile le chargement autonome de l'engin par l'arrière. En effet, la hauteur du châssis, même dans le cas de roues de petit diamètre, représente une dénivellation suffisante pour rendre la manoeuvre lente, difficile et risquée.

De plus, des rampes d'une certaine longueur ou en plusieurs tronçons s'avèrent nécessaires.

Ces rampes sont à transporter simultanément et à mettre en oeuvre.

Il en résulte un alourdissement de la semi-remorque au détriment de la charge utile transportable et un allongement de la durée de mise à pied d'oeuvre de l'engin.

Pour y remédier, il fallait, tout en évitant l'utilisation de rampes, permettre le chargement autonome par l'avant.

Les constructeurs ont conçu, pour ce faire, un nouveau type de semi-remorque et une liaison articulée avec le véhicule moteur facilement et rapidement désolidarisable.

En ce qui concerne la liaison articulée, celle-ci présente une forme générale incurvée dite en col de cygne assurant la transmission de l'effort de traction et du report de charge entre la pièce dite "sellette" portée par le châssis du véhicule porteur-remorqueur appelé souvent tracteur et en contrebas l'extrémité de la semi-remorque.

Afin d'écourter la manoeuvre de chargement, l'ensemble de liaison doit pouvoir se dissocier de l'extrémité avant de la semi-remorque et ceci rapidement.

La liaison articulée remplissant ces différentes fonctions a été appelée col de cygne détachable ou déboîtable en raison de sa forme générale et de son caractère dissociable.

On connaît déjà par la publication de brevet allemand DE-A-3116932 une liaison articulée dissociable du type col de cygne entre un véhicule porteur-remorqueur ou tracteur et une semi-remorque à plateau porteur surbaissé pour le transport d'un engin lourd.

Cette liaison à col de cygne comprend une crosse formée d'une base horizontale et d'un retour vertical. Cette crosse est montée sur la sellette du tracteur et se trouve prolongée longitudinalement vers l'arrière du tracteur par une fourche venant se loger dans la partie réceptrice avant de la semi-remorque.

L'accouplement s'effectue par l'introduction de la fourche dans la cavité réceptrice de l'extrémité avant de la semi-remorque. Un élément mécanique de retenue situé sous la fourche évite la sortie de celle-ci et permet le verrouillage de l'accouplement.

Cette immobilisation longitudinale par crochetage est ainsi complétée par un appui-blocage contre le chant avant d'extrémité du châssis à l'aide d'une pièce à extrémité en pointe ou rentrante en V, portant sur une pièce en regard de forme complémentaire.

La fonction d'immobilisation-calage de la partie basse du col de cygne dans les formes réceptrices et d'appui d'extrémité sur l'avant du châssis de semi-remorque est ainsi réalisée et garantie.

Un dispositif annexe de centrage est destiné à faciliter la manoeuvre d'accouplement.

Ceci n'empêche pas une certaine difficulté dans les manoeuvres d'approche et dans le verrouillage, qui constitue l'inconvénient principal de cette invention.

Elle nécessite d'abord d'amener le col de cygne en contre-bas sous le niveau du plateau porteur de la semi-remorque.

Elle nécessite ensuite une adresse particulière dans la manoeuvre pour venir crocheter et caler la fourche et son coude de raccordement avec la crosse dans le logement et contre le chant avant du plateau.

Par ailleurs, le mécanisme de verrouillage/déverrouillage de la liaison entre la partie arrière de la crosse et l'avant de la semi-remorque s'avère peu fiable, et la rapidité nécessaire aux mouvements d'association/dissociation puis à ceux de verrouillage/déverrouillage n'est pas garantie.

Ces difficultés sont liées aux formes techniques et aux fonctions utilisées, mais aussi au caractère monobloc du col de cygne et à l'étroit champ de vision du conducteur.

Bien entendu, les avantages généraux conférés par la liaison articulée dissociable en col de cygne détachable ou déboîtable ne doivent pas être neutralisés ou estompés par des caractéristiques particulières à effets contraires.

En effet, il faut pouvoir apporter et récupérer l'engin dans des conditions et des terrains difficiles. En particulier les manoeuvres d'accouplement et de désaccouplement doivent pouvoir s'effectuer facilement, rapidement et avec le maximum d'efficacité même en terrain boueux.

La présente invention a pour but de réunir le plus possible d'avantages concordants permettant de réaliser un ensemble totalement satisfaisant pour l'utilisateur tant dans sa mise en oeuvre que dans sa rentabilité.

Un des premiers objectifs consiste à rendre la manoeuvre d'accouplement et de désaccouplement de la liaison articulée facile et rapide.

Un autre objectif concerne la facilité d'adaptation à des zones de roulage à surface irrégulière et à reliefs prononcés engendrant des dévers et des décalages d'alignement.

Encore un autre objectif porte sur la réduction des couples de torsion et de déformation des pièces composant la liaison.

Encore un autre objectif concerne l'adaptation à la disparité des châssis des véhicules porteurs-remorqueurs existants entre les différents constructeurs.

Un dernier objectif porte sur la facilité de rattraper un léger défaut d'alignement entre la semi-remorque et l'ensemble camion-col de cygne permettant au seul conducteur de réaliser la manoeuvre d'accouplement.

A cet effet l'invention se rapporte à une liaison articulée du type à col de cygne entre un véhicule porteur-remorqueur et une semi-remorque à plateau porteur surbaissé et à train de roulage arrière mono ou multi-essieux pour le transport d'engins lourds de chantiers ou de défense ou autres caractérisée en ce qu'elle est formée :
. d'une interface d'accouplement à ouverture totale, supérieure et inférieure, intégrée dans l'extrémité avant du châssis de la semi-remorque délimitée par deux longerons terminés par des oreilles ;
. d'une fourche lisse montée en basculement sur la crosse par une articulation de pivotement, actionnée à son extrémité supérieure par un vérin de basculement ;
. d'un moyen de verrouillage des extrémités des longerons de l'interface d'accouplement à l'extrémité inférieure de la crosse pour constituer un ensemble mécanique rigide lors du roulage ;
. d'un ensemble d'assistance à la manoeuvre destiné à pré-ajuster la crosse et la fourche en inclinaison latérale en mouvements relatifs par rapport au tracteur.

De multiples avantages sont conférés par l'invention dont on citera ci-après les principaux :
. elle présente toutes les possibilités de manoeuvre et de facilité d'engagement en raison de sa structure articulée et du volume d'accouplement à ouverture totale ;
. on peut prendre appui sur le sol avec le dos de la fourche et l'utiliser comme bras de levier pour, par exemple, dégager la plate-forme d'un creux ou d'une bosse ;
. adaptation totale aux différents types de châssis de tracteurs par son dispositif de rattrapage ;
. elle permet de récupérer l'engin à transporter avec grande facilité dans les conditions climatiques et de terrain les plus difficiles ;
. rattrapage du dévers et pré-ajustement en angle d'assiette lors des mouvements d'approche par l'ensemble d'assistance à la manoeuvre ;
. le col de cygne n'empiète pas sur la longueur totale du véhicule ;
. on peut approcher et accéder directement au volume d'accouplement par le dessus selon une grande variété d'angles d'inclinaison pour une meilleure rapidité et précision de la manoeuvre ;
. possibilité de faire varier la garde au sol à partir de la cabine pour franchir certains passages à forte dénivellation.

Finalement la liaison à col de cygne détachable ou déboîtable possède tous les avantages réunis d'un col de cygne monobloc et fixe et d'un col de cygne articulé. Ainsi, en configuration de roulage elle équivaut à un col de cygne monobloc en raison du verrouillage.

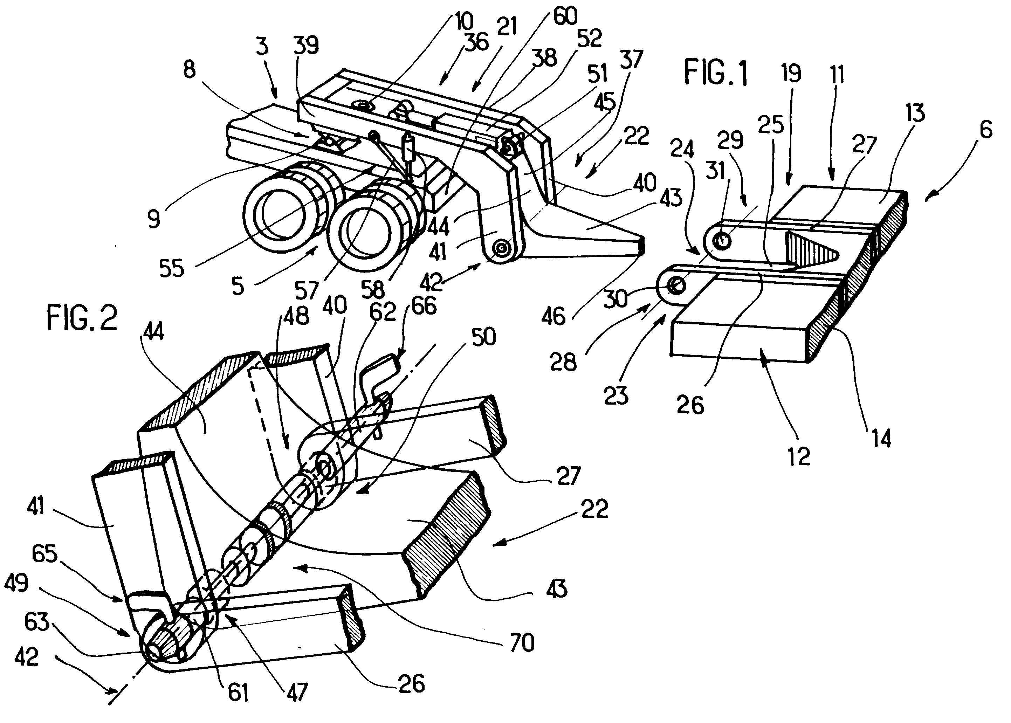

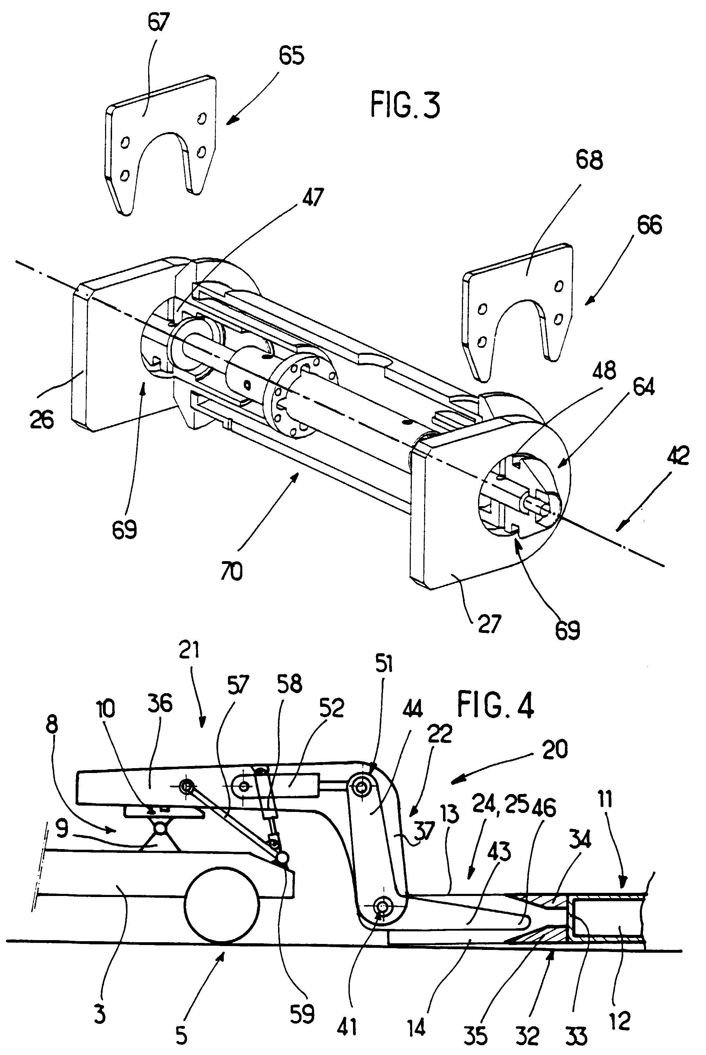

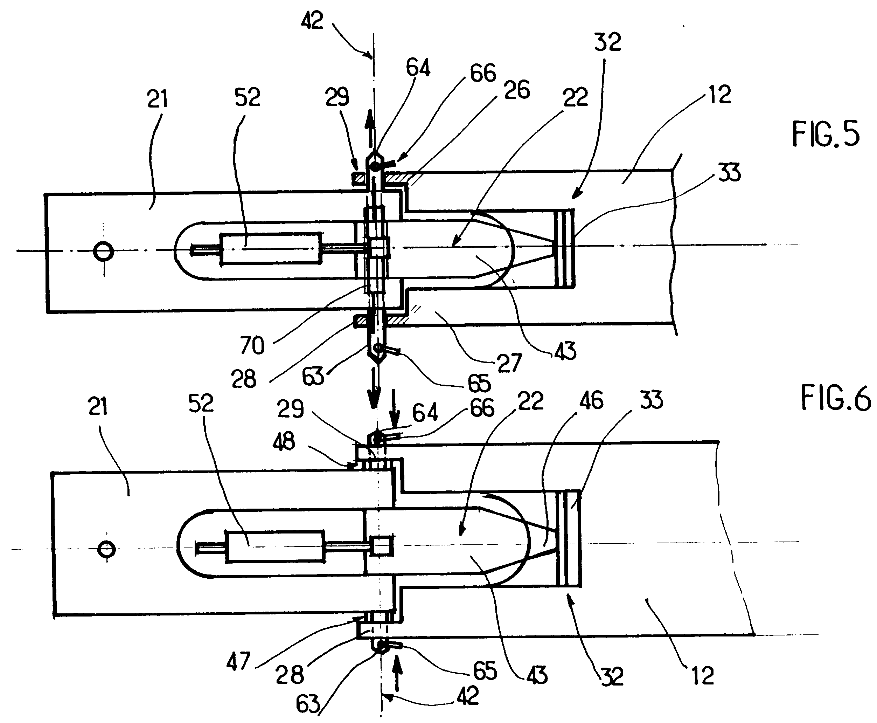

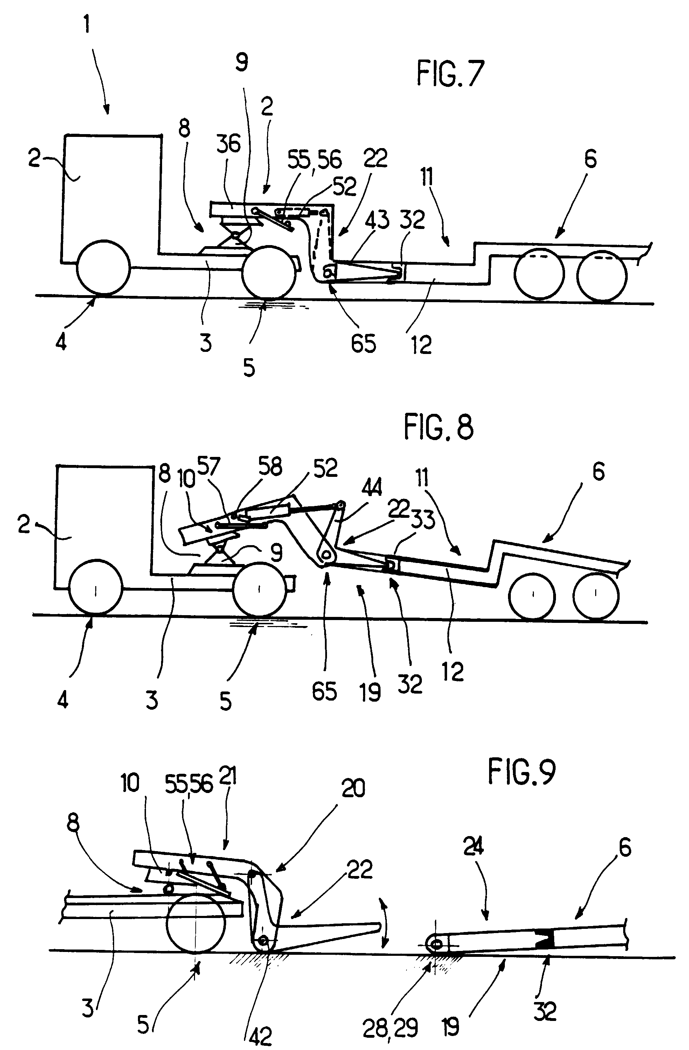

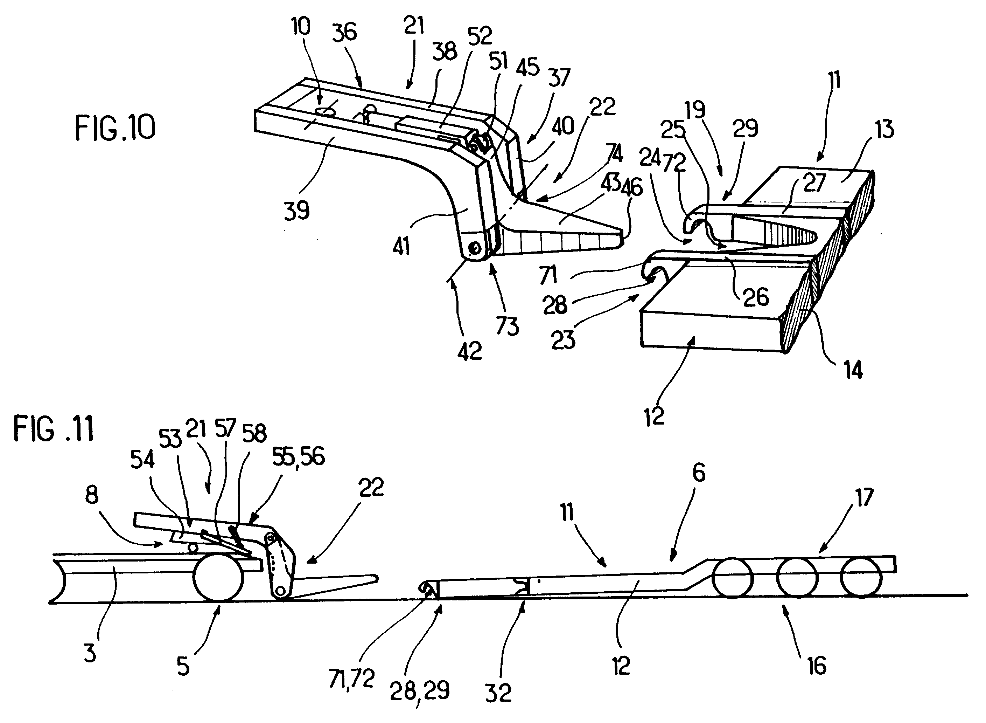

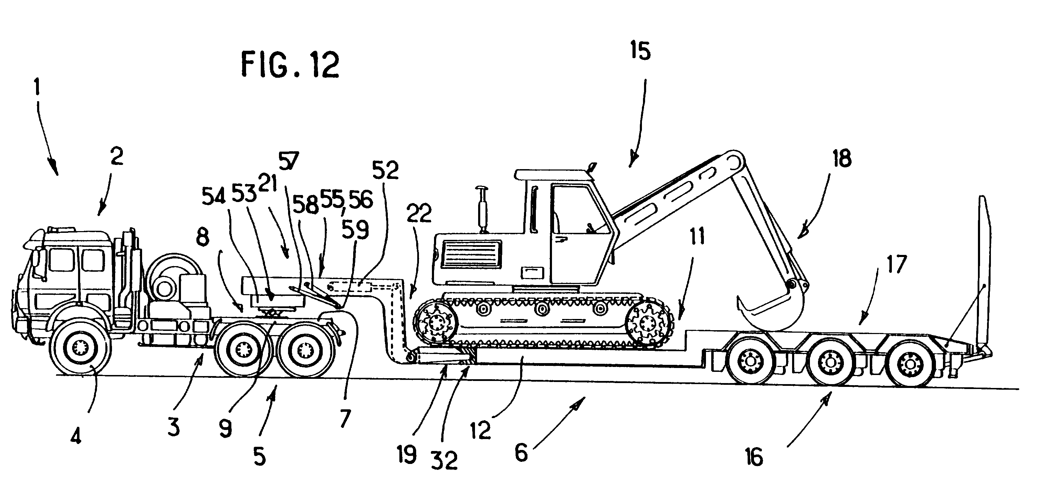

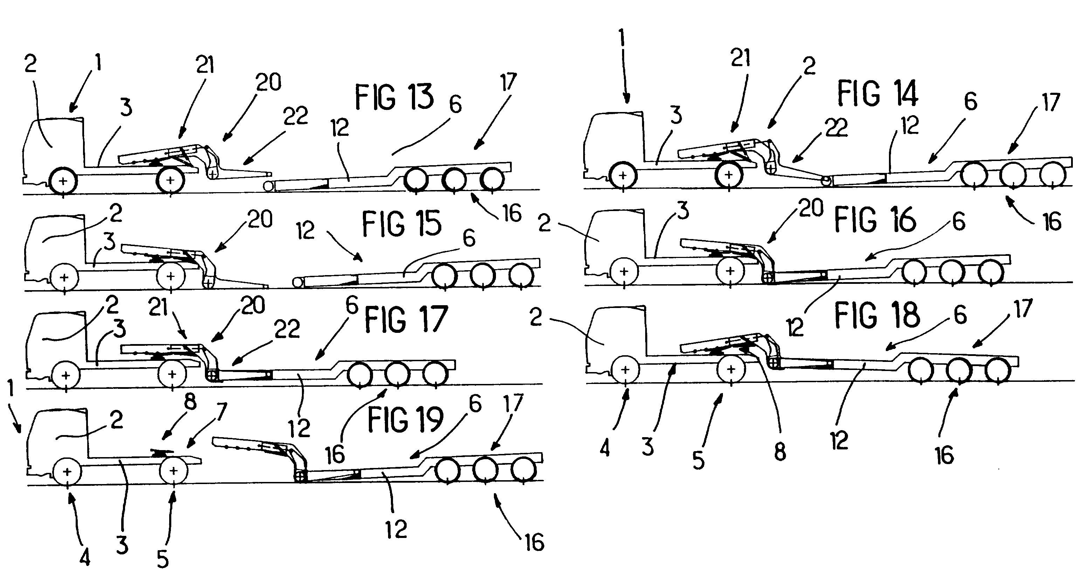

Les formes générales techniques sont celles apparaissant sur les dessins accompagnants et décrites en détail ci-après en relation avec les figures énoncées comme suit :
. la figure 1 est une vue générale en perspective simplifiée montrant la liaison à col de cygne montée sur la sellette d'un véhicule porteur-remorqueur dissociée de la semi-remorque ;
. la figure 2 est une vue agrandie en perspective de l'articulation entre la fourche et la crosse montrant l'ensemble double coaxial d'articulation-verrouillage;
. la figure 3 est une vue en perspective avec coupes longitudinales partielles et écorchés de l'articulation double coaxiale de pivotement de jonction et de verrouillage ;
. la figure 4 est une vue schématique partiellement de profil et en coupe longitudinale de la liaison articulée selon l'invention en position de roulage, semi-remorque chargée d'une pelleteuse hydraulique ;
. les figures 5 et 6 sont des vues schématiques en plan illustrant l'opération de verrouillage entre le col de cygne et le plateau bas de la semi-remorque;
. les figures 7 et 8 sont des vues schématiques de profil illustrant le travail du vérin de basculement après verrouillage ;
. la figure 9 est une vue de profil illustrant le travail de la fourche au sol à la manière d'un bras de levier ;
. la figure 10 est une vue en perspective simplifiée montrant une variante à fixation par crochet ;
. la figure 11 est une vue d'ensemble de profil de la même variante, col de cygne et semi-remorque dissociés ;
. la figure 12 est une vue générale de profil illustrant l'ensemble du convoi en position route, chargé d'une pelleteuse.
. les figures de 13 à 19 sont des vues schématiques de profil illustrant une séquence d'association ou de dissociation de la liaison articulée à col de cygne selon l'invention :
. figure 13 : approche liaison articulée et semi-remorque dissociée,
. figure 14 : descente à travers l'ouverture d'extrémité,
. figure 15 : rapprochement fourche au sol,
. figure 16 : accostage et mise en place de la fourche en fond d'extrémité du volume récepteur,
. figure 17 : verrouillage des extrémités sur l'axe commun de pivotement et position route,
. figure 18 : levage pour accès de chantier,
. figure 19 : abandon de la semi-remorque dans le cas de désattelage du tracteur.

La liaison articulée selon l'invention présente la conformation générale d'une liaison du type connu sous la dénomination "col de cygne".

L'association des moyens dont elle se compose lui assure des performances et une facilité d'usage tout à fait intéressantes dans les différentes situations d'exploitation.

Pour des raisons de simplification, on adoptera ci-après le terme tracteur pour désigner le véhicule porteur-remorqueur comportant la sellette.

On se référera tout d'abord plus particulièrement aux figures 7, 8, et 12 pour la description de l'environnement technique de la liaison articulée selon l'invention.

La liaison articulée selon l'invention est appelée à assurer la jonction entre un véhicule tracteur 1 comprenant une cabine 2, un châssis 3, un train de roues avant 4 et un train de roues arrière 5 mono-essieu ou multi-essieux et une semi-remorque 6 du type porte-engins ou autre.

Le châssis 3 du tracteur 1 comprend, sur sa partie arrière 7, un organe de couplage classique appelé sellette 8, montée pivotante par sa base 9 sur le châssis 3 et coopérant avec une cheville ouvrière 10 prisonnière dans la sellette lorsque fermée pour constituer déjà à elle seule un centre d'articulation à trois degrés de liberté nécessaire à la transmission de l'effort de traction et au report de charge dans toutes les configurations et positions imposées par le roulage et la route.

Comme on le verra ci-après, on retrouve ces trois degrés de liberté entre le tracteur 1 et la semi-remorque 6 grâce au col de cygne selon l'invention.

La semi-remorque présente un plan de chargement 11 sous la forme d'un plateau surbaissé ou plateau bas porteur 12 constitué de longerons et de traverses, recouverts d'un platelage supérieur 13 et d'une platelage inférieur 14.

Ce plateau bas porteur 12 supporte une charge mobile lourde 15, par exemple une pelleteuse hydraulique (figure 12) en vue de son transport routier jusqu'au lieu de destination, par exemple un chantier.

Il convient de rappeler ici que l'invention ne dépend nullement du poids ou de la nature ou même d'une quelconque caractéristique de la charge.

Le plan de chargement 11 se prolonge vers l'arrière au-dessus d'un train arrière de roulage 16 mono ou multi-essieux par un plateau surélevé 17 sur lequel peuvent reposer divers organes annexes ou une partie de l'engin, par exemple une pelle hydraulique 18 dans le cas de la pelleteuse représentée sur la figure 12 à titre d'exemple.

L'invention s'applique avec intérêt à des plateaux bas porteurs 12 extra surbaissés c'est-à-dire à garde au sol la plus faible possible compte tenu de la réglementation et des contraintes techniques.

Le plateau bas porteur surbaissé 12 présente à l'avant une interface d'accouplement 19 avec un ensemble articulé de liaison 20 du type à col de cygne détachable formé classiquement d'une crosse 21 prolongée vers le bas par une pièce d'accouplement appelée fourche 22 portée par la crosse.

L'interface d'accouplement 19 est intégrée dans une structure avant d'extrémité 23 de la semi-remorque 6. Selon une des caractéristiques de l'invention, l'interface d'accouplement 19 se présente sous la forme d'une ouverture totale d'accès 24 dans la structure avant d'extrémité 23 du plan du plateau bas porteur 12 par une absence totale du platelage supérieur 13 et inférieur 14 au droit de la zone d'entrée d'un volume d'accouplement 25, ouverture délimitée latéralement par deux longerons formant bras parallèles d'accouplement 26 et 27. Chaque longeron se termine par une structure de jonction d'extrémité appelée oreille, 28 et 29 conformée selon une forme technique adaptée pour réaliser la jonction d'assemblage-verrouillage avec l'ensemble crosse-fourche (figures 1 et 10).

Selon la variante de base décrite ci-après, chaque structure de Jonction d'extrémité est traversée par un passage circulaire 30 et 31 pour son assemblage-verrouillage au col de cygne.

L'ouverture d'accès 24 se poursuit vers et à l'intérieur du plateau porteur bas 12 par un logement récepteur 32 dans lequel viendra s'encastrer l'extrémité de la fourche du col de cygne détachable. L'ensemble constitue le volume d'accouplement 25.

Ce logement récepteur 32 affecte une forme convergente adaptée à celle de l'extrémité inférieure de la fourche 22 du col de cygne. Il est limité dans son fond par une paroi frontale de butée 33. Ce logement est formé par des pièces de renfort ou d'épaisseur telles que 34 et 35 jouant le rôle de fourrure afin de diminuer l'espace disponible tout en laissant un certain jeu de débattement pour l'extrémité de la fourche qu'il reçoit à encastrement (figure 4).

Ce logement récepteur 32 constitue le moyen essentiel par lequel le col de cygne assure sa prise mécanique dans le châssis de la semi-remorque 6 et la transmission de l'effort entre cette dernière et la sellette 8.

On examinera maintenant en détail le col de cygne et ses différentes pièces composantes représentées dans leur ensemble sur la figure 1.

Comme déjà indiqué, le col de cygne comprend tout d'abord une pièce mécanique principale appelée crosse 21 présentant une base horizontale 36 prolongée par un retour arrière 37 vertical vers le bas. Cette crosse est formée, comme le montre la figure 1, par la base horizontale 36 constituée de deux longerons parallèles 38 et 39 prolongés vers le bas par deux montants 40 et 41 constituant le retour arrière 37. A l'extrémité de ces montants verticaux est montée basculante autour d'un axe géométrique de pivotement 42 la fourche 22.

Celle-ci est lisse et affecte une forme générale à deux plans perpendiculaires formant une partie inférieure 43 et une partie supérieure 44 dont la jonction est centrée sur l'axe géométrique de pivotement 42.

Chacune des parties inférieure 43 et supérieure 44 de la fourche remplit une fonction particulière.

La partie supérieure 44 ou queue de fourche présente une extrémité supérieure 45 articulée à un élément moteur l'actionnant en basculement par son articulation de pivotement autour de l'axe de pivotement 42.

La partie inférieure 43 ou bras de préhension affecte une forme générale allongée et triangulaire prévue de grande longueur dont l'extrémité est conformée en pointe arrondie 46 dirigée vers la semi-remorque.

L'articulation de pivotement autour de l'axe géométrique de pivotement 42 peut être réalisée dans la pratique sous différentes formes techniques.

La crosse 21 et la fourche 22 sont par exemple reliées entre elles par l'intermédiaire de deux bouts d'arbre 47 et 48 que la fourche présente latéralement coaxialement à l'axe géométrique de pivotement 42.

Ces bouts d'arbre jouent le rôle de palier pour des ouvertures circulaires 49 et 50 que les deux montants 40 et 41 présentent à chacune de leurs extrémités inférieures.

L'extrémité supérieure 45 de la queue de fourche par exemple conformée en pointe porte une articulation 51 la reliant à la tige d'un vérin de basculement 52 à double effet dont le corps est articulé par son extrémité sur la base horizontale 36 dans l'espace situé entre les longerons 38 et 39 qui la forment.

Ce vérin de basculement 52 à double effet a pour but de réaliser le basculement de la fourche par des mouvements de poussée ou de retrait longitudinaux par rapport à la crosse, mais aussi de modifier les positions d'inclinaison du châssis porteur dans les différentes configurations de route et d'obstacle et d'équilibrage du châssis par rapport à sa charge.

La crosse est articulée de façon conventionnelle à la sellette pivotante 8 du tracteur par la cheville ouvrière classique 10 s'adaptant aux différents types de sellettes maintenant normalisées.

Un dispositif intéressant d'adaptation 53 permet de rattraper les différentes hauteurs pouvant exister entre les châssis provenant de diverses origines et pour faire varier la hauteur d'attelage.

Ce dispositif d'adaptation 53 se compose, par exemple, d'un caisson 54 à cadre déplaçable portant la cheville ouvrière. Ce cadre est déplaçable selon des positions prédéterminées correspondant aux différences de hauteurs entre les châssis des divers constructeurs (figures 11 et 12), mais aussi de façon continue pour faire varier la hauteur d'attelage.

Un ensemble original d'assistance à la manoeuvre d'accouplement est prévu.

Il s'agit d'un couple de deux dispositifs moteurs 55 et 56 éventuellement du type à compas montés articulés à la base horizontale de la crosse sur chacun de ses côtés latéraux.

Selon une variante de base, chaque dispositif d'assistance à la manoeuvre se compose d'une bielle telle que 57 articulée d'une part sur la base horizontale de la crosse et d'autre part à un vérin d'assistance 58 monté entre la bielle et la crosse.

L'autre extrémité de la bielle n'est reliée qu'au vérin c'est-à-dire qu'elle n'est pas articulée sur le châssis du tracteur. Elle repose uniquement sur celui-ci par l'intermédiaire d'un coussinet, d'une plaque ou d'une semelle d'appui 59 pour réaliser un ensemble à col de cygne entièrement amovible par rapport au châssis du tracteur (figures 1 et 4).

Pour garantir le jumelage, une barre d'accouplement 60 est prévue. Cette barre assure la liaison mécanique entre les deux extrémités basses des bielles.

Selon l'exemple représenté sur les figures, la bielle est faiblement inclinée en position de route tandis que le vérin est fortement incliné.

Selon une version simplifiée, chacun de ces dispositifs ne comprendra qu'un seul vérin d'assistance monté entre la base horizontale de la crosse et un support d'appui sur le châssis du tracteur.

La commande de ces vérins permet, en les faisant agir l'un après l'autre sur la base horizontale 36 de la crosse, de modifier l'inclinaison relative de la fourche de part et d'autre d'un plan vertical médian au tracteur. Ainsi, en modifiant rapidement la position de la crosse et donc de la fourche par rapport à la verticale on assure un travail préparatoire de préajustement en inclinaison latérale lors de l'approche.

Ce mouvement d'inclinaison latérale conjugué au mouvement de basculement d'ensemble de la fourche autour de son axe de pivotement assure un engagement direct et rapide, notamment dans les cas de situations de dévers du porteur-remorqueur par rapport à la semi-remorque ou inversement.

Pour permettre l'association et la dissociation de la liaison articulée avec la semi-remorque, on prévoit des moyens d'assemblage à dissociation rapide avec les bras d'accouplement 27 et 28.

Conformément à l'invention, ces moyens sont liés à l'articulation de pivotement entre la crosse et la fourche. Ils transforment cette articulation en un centre de pivotement avec assemblage-verrouillage.

Plus particulièrement, la jonction-assemblage s'effectue dans le prolongement de l'axe de pivotement et l'assemblage résulte de forces longitudinales suivant cet axe.

On décrira ci-après une des variantes du moyen d'assemblage-verrouillage de la semi-remorque à la crosse.

Le mécanisme assurant cette fonction est intégré dans l'articulation de pivotement qui regroupe selon l'invention plusieurs fonctions techniques.

Celui décrit immédiatement ci-après, comporte un verrouillage.

La fourche comprend de chaque côté un axe rétractable de jonction 61 et 62 à l'intérieur de chacun des bouts d'arbre 47 et 48 et coaxialement à ceux-ci selon l'axe géométrique de pivotement 42.

Ces axes rétractables de jonction comportent par exemple des extrémités coniques. Ils sont destinés à traverser les passages circulaires 30 et 31 que les bras d'accouplement 26 et 27 présentent à chacune de leurs extrémités en vue de réaliser la jonction-assemblage de la semi-remorque à la crosse.

Pour ce faire, chaque tête 63 et 64 des axes rétractables 61 et 62 possède au voisinage de son extrémité un perçage, un passage ou un logement transversal dans lequel vient s'immobiliser une pièce de blocage 65 et 66 en vue de constituer un arrêt longitudinal. Ce blocage est assuré par toute pièce adaptée : une clé, une goupille, une clavette, une broche transversale ou tout autre élément équivalent coopérant avec une structure de maintien prévue sur l'axe.

On peut également imaginer une pièce de blocage en forme de fer à cheval 67 et 68 qui viendrait s'immobiliser transversalement en coulissant le long d'une rainure transversale opposée telle que 69 pratiquée dans la surface latérale de chaque axe rétractable de jonction 61 et 62 et ainsi bloquer chaque tige en mouvement de retrait (figure 3).

Selon une autre variante, la tête d'extrémité des axes de jonction peut être expansible et constituer ainsi un blocage en retrait.

Les axes rétractables de jonction sont des pièces rapportées montées sur chacune des tiges d'un vérin de verrouillage 70 à double tige travaillant en écartement ou en rapprochement des tiges.

La poussée occasionnée par le vérin provoquera la sortie des axes de jonction à travers les ouvertures en regard des pièces à assembler et donc l'établissement d'une jonction par une liaison articulée de pivotement entre l'extrémité de la semi-remorque et la crosse.

Cette liaison peut être rendue rigide après verrouillage consécutif au mouvement de retrait des tiges du vérin 70. Après rattrapage du jeu latéral l'assemblage devient rigide et forme un ensemble mécanique du type monobloc. Celui-ci constitue alors le parfait équivalent d'une liaison à col de cygne rigide.

Bien entendu, pour ce qui précède concernant le verrouillage de la fonction fourche-châssis, tout autre système pneumatique, hydraulique ou mécanique équivalent peut convenir ainsi que des variantes purement manuelles.

Il est bien entendu que des variantes simplifiées avec ou sans verrouillage entrent pleinement dans le cadre de la présente invention.

Selon la variante représentée sur les figures 10 et 11, la liaison articulée de jonction de la semi-remorque à la crosse s'effectue par simple accrochage ou crochetage sans verrouillage.

Cette façon de relier la semi-remorque à la crosse s'avère suffisante en raison de l'encastrement de la pointe de la fourche 22 dans le logement récepteur 32 d'extrémité du volume d'accouplement et la réaction d'appui des extrémités de l'axe de pivotement.

A cet effet, les extrémités des bras d'accouplement affectent chacune une forme de crochet ou sont solidarisées à des pièces en crochet 71 et 72. De plus, dans ce cas, l'axe de pivotement de la fourche sur la crosse se prolonge à l'extérieur de part et d'autre des extrémités de la crosse pour former deux bouts d'axe sur chacun desquels vient porter l'extrémité en crochet de chacun des bras 26 et 27 bordant l'ouverture d'accès 24.

On peut également envisager, comme représenté sur la figure 10, de réaliser les extrémités des montants 40 et 41 selon une structure double à deux flasques parallèles comportant deux ouvertures correspondantes en regard, traversées par un axe 73 et 74 sur lequel vient porter chaque extrémité en crochet ou chaque crochet 71 et 72.

On décrira maintenant les différentes phases de fonctionnement de la liaison articulée selon l'invention.

On a choisi une séquence d'accouplement. Le désaccouplement se déduit de celle-ci par mouvements et suites inverses.

La semi-remorque a été amenée vide sur le chantier en vue de récupérer un engin de travaux publics.

Elle a été détachée à proximité de l'engin qui est venu se placer sur le plan porteur par ses propres moyens.

Il s'agit maintenant de réaccoupler le camion porteur-remorqueur à la semi-remorque.

Le relief, l'état du sol et les conditions météorologiques peuvent être notablement défavorables pour montrer tout l'intérêt de l'invention.

Ainsi, on peut imaginer le terrain irrégulier et boueux, l'atmosphère froide et pluvieuse n'incitant pas le conducteur à rester longtemps hors de sa cabine le protégeant de la pluie et du froid.

L'extrémité de la semi-remorque repose sur un sol inégal en dévers prononcé.

Le conducteur-manipulateur devra, par la manoeuvre d'accouplement, engager le bras de préhension de la fourche dans le volume d'accouplement de la semi-remorque.

Il place son camion, châssis-cabine et col de cygne approximativement dans l'alignement de la semi-remorque, col de cygne relevé le plus près possible de l'extrémité avant de la semi-remorque.

Préalablement à l'accouplement, l'invention offre au conducteur-manipulateur la possibilité de déplacer légèrement l'avant de la semi-remorque pour le placer dans une présentation plus favorable ou le soulever ou l'extraire de l'endroit où il s'était enfoncé.

Il utilise à cet effet la fourche comme bras de levier en la faisant reposer par sa base et en l'actionnant en montée à l'aide du vérin de basculement conformément à la figure 9.

Ensuite, l'approche et l'engagement s'effectuent de la façon suivante.

Un préajustement en inclinaison peut s'effectuer à partir de la cabine à l'aide des dispositifs d'assistance à la manoeuvre. Cette adaptation au dévers permet de présenter la fourche parallèlement au plateau porteur.

L'engagement de la fourche s'effectue par le dessus à travers l'ouverture du châssis (figure 14).

Un simple mouvement de recul permet alors d'enfoncer la fourche dans le volume récepteur.

Il n'y a pas lieu ici de chercher le volume récepteur sous le châssis ou d'ajuster les mouvements pour réaliser une immobilisation par accrochage.

On procède ensuite au verrouillage.

Les oreilles des bras d'accouplement de l'ouverture du châssis de semi-remorque sont disposées en face des bouts d'arbre de pivotement, lorsque le bras de préhension de la fourche est arrivé au fond du logement récepteur.

Les axes de verrouillage sont alors sortis et immobilisés en déplacement longitudinal. Il suffit de les rentrer à force pour réaliser le verrouillage et transformer le col de cygne articulé en col de cygne monobloc.

L'accouplement est terminé. La semi-remorque fait corps avec le col de cygne. On procède à l'élévation jusqu'en position route grâce au vérin de basculement.

On verrouille de préférence le vérin de basculement en position route pour éviter la transmission des fortes pressions engendrées par les chocs et secousses de roulage.

Le vérin de basculement peut être momentanément déverrouillé pour élever la semi-remorque en inclinaison afin de franchir certaines saillies trop prononcées.

Il est bien entendu qu'au-delà des moyens décrits, diverses modifications évidentes et variantes simples entrent dans le cadre de la présente invention, telle que définie par les revendications.

## Revendications

1. Liaison articulée du type à col de cygne entre un véhicule porteur-remorqueur dit tracteur (1) et une semi-remorque (6) à plateau porteur surbaissé (12) et à train de roulage arrière mono ou multi-essieux pour le transport d'une charge mobile (15), par exemple d'un engin lourd de chantier ou de défense, col de cygne comprenant une crosse (21) formée d'une base horizontale (36) et d'un retour vertical (37), montée sur la sellette du tracteur (1) et une fourche (22) prolongeant longitudinalement la crosse, caractérisée en ce qu'elle est formée :
. d'une interface d'accouplement (19) à ouverture totale d'accès (24) par le dessus, par le dessous, et par l'avant ouvrant un volume d'accouplement (25), ouverture intégrée dans l'extrémité avant de la semi-remorque (6) et délimitée latéralement par deux bras d'accouplement (26) et (27) terminés par des structures de jonction ;
. d'une fourche (22) lisse montée pivotante sur la crosse (21) entre deux montants (40) et (41) d'extrémité de la crosse par une articulation de pivotement autour d'un axe géométrique de pivotement (42) se trouvant dans la partie inférieure des montants (40) et (41), fourche (22) actionnée à son extrémité supérieure par un vérin de basculement (52) ;
. d'un centre de jonction-verrouillage des extrémités de l'interface d'accouplement (19) contre l'extrémité inférieure de la crosse (22) dans lequel sont associées les fonctions de pivotement de la crosse aux fonctions d'assemblage-verrouillage pour former un assemblage mécanique rigide ;
. d'un ensemble d'assistance à la manoeuvre monté entre la crosse (21) et l'arrière du châssis du tracteur (1) destiné à pré-ajuster la crosse (21) en mouvements relatifs d'inclinaison par rapport au châssis du tracteur.

2. Liaison selon la revendication 1 caractérisée en ce que le centre de jonction-verrouillage comprend l'articulation de pivotement de la fourche sur la crosse (21) et des moyens d'assemblage-verrouillage de la semi-remorque à la crosse.

3. Liaison selon les revendications 1 et 2 caractérisée en ce que l'articulation de pivotement de la fourche (29) sur la crosse (21) et les moyens d'assemblage-verrouillage sont coaxiaux.

4. Liaison selon les revendications 2 et 3 caractérisée en ce que l'articulation de pivotement est formée de deux bouts d'arbre (47) et (48) prolongeant latéralement la jonction des plans perpendiculaires constituant la fourche.

5. Liaison selon la revendication 3 caractérisée en ce que la jonction-assemblage est un blocage transversal des structures d'extrémité des deux bras d'accouplement (25) et (26) contre les extrémités du retour (37) de crosse selon des forces de blocage confondues avec l'axe géométrique de pivotement (42).

6. Liaison selon la revendication 5 caractérisée en ce que les moyens de jonction-assemblage sont deux axes rétractables de jonction (61) et (62) coaxiaux à l'axe de pivotement (42), traversant chaque extrémité de chaque montant de la crosse pour traverser également les structures d'extrémités des bras d'accouplement, les extrémités de chaque axe rétractable de jonction présentant une pièce de blocage transversal.

7. Liaison selon la revendication 6 caractérisée en ce que les axes rétractables sont montés sur chaque tige d'un vérin à double tige.

8. Liaison selon les revendications précédentes caractérisée en ce que la pièce de blocage présente une forme en fer à cheval (67) et (68) venant se monter transversalement à l'axe dans deux rainures transversales opposées.

9. Liaison selon l'une quelconque des revendications précédentes caractérisée en ce que les structures de jonction des deux bras d'accouplement sont des crochets (71) et (72) et en ce que chacune des extrémités des montants du retour arrière de crosse sont formées de deux flasques maintenant entre eux un axe sur lequel vient porter à pivotement chaque crochet.

10. Liaison selon la revendication 1 caractérisée en ce que l'ensemble d'assistance à la manoeuvre se compose de deux dispositifs moteurs (55) et (56) prévus de chaque côté de la base de crosse (21) formés chacun d'une bielle articulée (57) et d'un vérin d'assistance (58), la bielle étant articulée à la base de la crosse d'une part et au vérin d'assistance d'autre part, ce dernier étant également articulé à la base horizontale de la crosse, et en ce que l'extrémité libre de la bielle est en contact d'appui avec le châssis du tracteur.

11. Liaison selon la revendication précédente caractérisée en ce que l'ensemble d'assistance ne comporte qu'un vérin de chaque côté de la base horizontale de la crosse, l'extrémité libre étant en contact d'appui avec le châssis du véhicule tracteur.

12. Liaison selon l'une quelconque des revendications précédentes, caractérisée en ce que le vérin de basculement (52) est commandé après accouplement en vue de modifier l'inclinaison du châssis porteur.

## Patentansprüche

1. Gelenkige Verbindung in Form eines Schwanenhalses zwischen einem Fahrzeugtransporter-Schlepper, wie einem Sattelschlepper (1), und einem Sattelauflieger (6) mit abgesenkter Ladefläche (12) und einem hinteren Radsatz mit einer oder mehreren Radachsen zum Transport einer beweglichen Ladung (15), z.B. schweren Baustellen- oder wehrtechnischen Geräts, wobei der Schwanenhals ein von einer horizontalen Basis (36) und einem Kröpfteil (35) gebildetes Kopfstück (21), das am Sattel des Sattelschleppers (1) festgelegt ist, und eine das Kopfstück longitudinal verlängernde Gabel (22) aufweist, gekennzeichnet durch
- ein Kupplungsstück (19) mit einer von oben, unten und vorne vollständig zugänglichen, einen Kupplungsraum (25) bietenden, Öffnung (24), die am vorderen Ende des Sattelaufliegers (6) integriert und seitlich durch zwei Kupplungsarme (26) und (27) begrenzt ist, die in Verbindungsstrukturen enden;
- eine glatte Gabel (22), welche am Kopfstück (21) zwischen zwei Schenkeln (40, 41) am Ende des Kopfstücks um eine sich im unteren Abschnitt der Schenkel (40, 41) befindende geometrische Schwenkachse mittels eines Schwenkgelenks schwankbar montiert ist, und an ihrem oberen Ende mittels eines Schwenkzylinders (52) betätigt wird;
- ein Verbindungs-/Verriegelungszentrum zwischen den Enden des Kupplungsstücks (19) und dem unteren Ende des Kopfstücks (21), in welchem die Schwenkfunktionen des Kopfstücks mit den Anschluß-/Verriegelungsfunktionen zur Bildung eines steifen, mechanischen Anschlusses vereinigt sind;
- eine Hilfseinheit für die Betätigung, die zwischen dem Kopfstück (21) und dem Chassisheck des Sattelschleppers (1) angeordnet ist und dazu dient, das Kopfstück (21) in einer relativen Neigungsbewegung gegenüber dem Chassis des Sattelschleppers (1) voreinzustellen.

2. Verbindung nach Anspruch 1, dadurch gekennzeichnet, daß das Verbindungs-/Verriegelungszentrum das Schwenkgelenk der Gabel an dem Kopfstück (21) und Einrichtungen zum Anschließen und Verriegeln des Sattelaufliegers an dem Kopfstück aufweist.

3. Verbindung nach Anspruch 1 und 2, dadurch gekennzeichnet, daß das Schwenkgelenk der Gabel (29) am Kopfstück (21) und die Einrichtungen zum Anschließen und Verriegeln koaxial angeordnet sind.

4. Verbindung nach Anspruch 2 und 3, dadurch gekennzeichnet, daß das Schwenkgelenk durch zwei Wellenzapfen (47, 48) gebildet ist, welche die Verbindung der zueinander senkrechten, die Gabel bildenden Ebenen seitlich verlängern.

5. Verbindung nach Anspruch 3, dadurch gekennzeichnet, daß die Anschlußverbindung eine Querverriegelung der Strukturen am Ende der beiden Kupplungsarme (25, 26) gegen die Enden des Kröpfteils (37) des Kopfstücks zufolge der mit der geometrischen Schwenkachse (42) zusammenfallenden Blockierkräften ist.

6. Verbindung nach Anspruch 5, dadurch gekennzeichnet, daß die Einrichtungen zur Anschlußverbindung zwei koaxial zur Schwenkachse (42) angeordnete, ausziehbare Verbindungsachsen (61, 62) sind, die jeweils das Ende jedes Schenkels des Kopfstücks durchsetzen, um gleichermaßen die Endstrukturen der Kupplungsarme zu durchdringen, wobei die Enden jeder Verbindungsachse ein Querverriegelungsteil aufweisen.

7. Verbindung nach Anspruch 6, dadurch gekennzeichnet, daß die ausziehbaren Achsen an je einer Kolbenstange eines doppeltwirkenden Zylinders angeordnet sind.

8. Verbindung nach einem der vorangehenden Ansprüche, dadurch gekennzeichnet, daß das Verriegelungsteil Hufeisenform (67, 68) aufweist und an der Achse in zwei gegenüberliegende Quernuten eingreift.

9. Verbindung nach einem der vorangehenden Ansprüche, dadurch gekennzeichnet, daß die Verbindungsstrukturen der beiden Kupplungsarme Haken (71, 72) sind und daß jedes Ende der Schenkel des Kröpfteils des Kopfstücks von zwei Flanschen gebildet ist, welche zwischen sich eine Achse tragen, an der jeder Haken gelenkig angreift.

10. Verbindung nach Anspruch 1, dadurch gekennzeichnet, daß die Hilfseinheit für die Betätigung aus zwei Antriebseinrichtungen (55, 56) besteht, welche an jeder Seite der Basis des Kopfstücks (21) vorgesehen und jeweils von einem Lenker (57) und einem Hilfszylinder (58) gebildet sind, wobei der Lenker einerseits an der Basis des Kopfstücks, andererseits am Hilfszylinder gelagert und letzterer gleichermaßen an der horizontalen Basis des Kopfstücks gelagert ist, und daß das freie Ende des Lenkers mit dem Chassis des Sattelschleppers in Anschlagkontakt steht.

11. Verbindung nach dem vorangehenden Anspruch, dadurch gekennzeichnet, daß die Hilfseinheit nur einen Zylinder an jeder Seite der horizontalen Basis des Kopfstücks aufweist, dessen freies Ende mit dem Chassis des Sattelschleppers in Anschlagkontakt steht.

12. Verbindung nach einem der vorangehenden Ansprüche, dadurch gekennzeichnet, daß der Schwenkzylinder (42) nach dem Ankuppeln angesteuert wird, um die Neigung des Sattelaufliegers zu verändern.

## Claims

1. Articulated connection of the swan neck type, between a transport-trailer vehicle known as a tractor (1) and a semi-trailer (6) with a drop carrier platform (12) and with a single- or multi-axle rear rolling train for transporting a mobile load (15), for example a heavy site or defence machine, the swan neck comprising a tie bar (21) consisting of a horizontal base (36) and a vertical return (37) which is mounted on the bolster of the tractor (1), and a fork (22) which extends the tie bar longitudinally, characterised in that it consists of:
. a coupling interface (19) with full access opening (24) from above, from below and from the front, which opens up a coupling volume (25), which aperture is integrated in the front end of the semi-trailer (6) and is delimited laterally by two coupling arms (26) and (27) which end in connection structures;
. a plain fork (22) which is mounted in a pivoting manner on the tie bar (21) between two end uprights (40) and (41) of the tie bar, by means of an articulation which pivots about a geometric pivoting shaft (42) disposed in the lower part of the uprights (40) and (41), which fork (22) is activated at its upper end by a tilting jack (52);
. a centre part for connecting-locking the ends of the coupling interface (19) against the lower end of the tie bar (22), in which the pivoting functions of the tie bar are associated with the assembly-locking functions in order to form a rigid mechanical assembly;
. an assembly to assist manoeuvring which is mounted between the tie bar (21) and the rear of the chassis of the tractor (1), and is destined to pre-adjust the tie bar (21) in movements of inclination in relation to the tractor chassis.

2. Connection according to claim 1, characterised in that the centre part for connection-locking comprises the pivoting articulation of the fork on the tie bar (21) and means for assembly-locking of the semi-trailer on the tie bar.

3. Connection according to claims 1 and 2, characterised in that the pivoting articulation of the fork (29) on the tie bar (21) and the assembly-locking means are coaxial.

4. Connection according to claims 2 and 3, characterised in that the pivoting articulation consists of two shaft ends (47) and (48) which extend laterally the connection of the perpendicular planes which constitute the fork.

5. Connection according to claim 3, characterised in that the connection-assembly provides transverse locking of the end structures of the two coupling arms (25) and (26) against the return ends (37) of the tie bar, in accordance with locking forces associated with the geometric pivoting shaft (42).

6. Connection according to claim 5, characterised in that the connection-assembly means are two retractable connection shafts (61) and (62) coaxial to the pivoting shaft (42), which pass through each end of each upright of the tie bar, and then also pass through the end structures of the coupling arms, the ends of each retractable connection shaft having a transverse locking piece.

7. Connection according to claim 6, characterised in that the retractable shafts are mounted on each rod of a double-rod jack.

8. Connection according to the preceding claims, characterised in that the locking piece is in the shape of a horseshoe (67) and (68), which is mounted transversely to the shaft in two opposite transverse slots.

9. Connection according to any one of the preceding claims, characterised in that the connection structures of the two coupling arms are hooks (71) and (72), and in that each of the ends of the tie bar rear return uprights consists of two end plates which maintain between them a shaft on which each hook is pivoted.

10. Connection according to claim 1, characterised in that the assembly which assists manoeuvring consists of drive devices (55) and (56) which are provided on each side of the base of the tie bar (21), each consisting of an articulated connecting rod (57) and an assistance jack (58), the connecting rod being articulated on the base of the tie bar at one end and on the assistance jack at the other end, the latter also being articulated on the horizontal base of the tie bar, and the free end of the connecting rod is in support contact with the chassis of the tractor.

11. Connection according to the preceding claim, characterised in that the assistance assembly comprises a jack alone on each side of the horizontal base of the tie bar, the free end being in support contact with the chassis of the tractor vehicle.

12. Connection according to any one of the preceding claims, characterised in that the tilting jack (52) is controlled after coupling takes place, in order to modify the inclination of the support chassis.
